# EUROPEAN PATENT SPECIFICATION

(11) **EP 3 689 891 B1**
(45) Date of publication and mention of the grant of the patent: **01.03.2023**
(21) Application number: 18863572.6
(22) Date of filing: 20.09.2018
(51) Int. Cl.: C07F 15/06, C07F 7/08, B01J 31/22

(54) **COBALT COMPLEX, PRODUCTION METHOD THEREFOR, AND CATALYST FOR HYDROSILYLATION REACTION**
KOBALTKOMPLEX, HERSTELLUNGSVERFAHREN DAFÜR UND KATALYSATOR FÜR HYDROSILYLIERUNGSREAKTION
COMPLEXE DE COBALT, PROCÉDÉ DE PRODUCTION DE CELUI-CI, ET CATALYSEUR POUR RÉACTION D'HYDROSILYLATION

(30) Priority: 29.09.2017 JP 2017190703
(43) Date of publication of application: 05.08.2020
(73) Proprietor: Kyushu University, National University Corporation, Nishi-ku Fukuoka-shi Fukuoka 819-0395 (JP); Shin-Etsu Chemical Co., Ltd., Tokyo 100-0004 (JP)
(72) Inventor: NAGASHIMA, Hideo, Fukuoka-shi Fukuoka 819-0395 (JP); SANAGAWA, Atsushi, Fukuoka-shi Fukuoka 819-0395 (JP); NODA, Daisuke, Annaka-shi Gunma 379-0224 (JP); SAKUTA, Koji, Annaka-shi Gunma 379-0224 (JP)
(74) Representative: Mewburn Ellis LLP
(86) International application number: PCT/JP2018/034802
(87) International publication number: WO 2019/065448

(56) References cited:
- WO-A1-2017/010366
- WO-A1-2017/126562
- WO-A1-2018/159595
- JP-A- 2016 513 085
- ALEJANDRO RIVERA-HERNÁNDEZ ET AL: "Regio- and Stereoselective Hydrosilylation of Unsymmetrical Alkynes Catalyzed by a Well-Defined, Low-Valent Cobalt Catalyst", ORGANIC LETTERS, vol. 18, no. 17, 23 August 2016 (2016-08-23), pages 4242-4245, XP055765716, US ISSN: 1523-7060, DOI: 10.1021/acs.orglett.6b01987
- ALEX E. CARPENTER ET AL: "Zwitterionic Stabilization of a Reactive Cobalt Tris-Isocyanide Monoanion by Cation Coordination", ANGEWANDTE CHEMIE INTERNATIONAL EDITION, vol. 51, no. 37, 10 September 2012 (2012-09-10), pages 9412-9416, XP055765702, ISSN: 1433-7851, DOI: 10.1002/anie.201205058
- Kawabata,Shoma et al.,: "1PB-080 Hydrosilylation of alkenyl sulfides with hydrosiloxanes catalyzed by cobalt isocyanide catalysts", Proceedings of the Spring Annual Meeting of the Chemical Society of Japan; March 16-19, 2017, Yokohama, Japan, vol. 97, 3 March 2017 (2017-03-03), page 1PB-080, XP009519766,
- Sanagawa, A. et al.,: "1G2-55 Cobalt or Iron isocyanide complexes catalyzed hydrosilylation of alkenes with hydrosiloxanes", Proceedings of the Spring Annual Meeting of the Chemical Society of Japan; March 16-19, 2017, Yokohama, Japan, vol. 97, 3 March 2017 (2017-03-03), page 1G2-55, XP009519769,
- SANAGAWA, A. et al.: "P2-37 Alkene Hydrosilylation with Hydrosiloxanes catalyzed by Cobalt or Iron Isocyanide complexes", 64th Symposium on Organometallic Chemistry Japan, vol. 64, 21 August 2017 (2017-08-21), page 83, XP009519850, Japan
- Sanagawa, Atsushi et al.,: "1C04 Alkene hydrosilylation using low-valent cobalt and iron isocyanide complexes as catalysts", Proceedings of the 120th discussion forum A of the Catalysis Society of Japan, CATSJ Meeting, vol. 120, 5 September 2017 (2017-09-05), pages 120-121, XP009519851,
- SANAGAWA, A. et al.: "Cobalt(0) and Iron(0) Isocyanides as Catalysts for Alkene Hydrosilylation with Hydrosiloxanes", Organometallics, vol. 37, no. 17, 10 September 2018 (2018-09-10), pages 2859-2871, XP055506737, ISSN: 0276-7333, DOI: 10.1021/acs.organomet.8b00389
- A. J. Chalk ET AL: "Homogeneous Catalysis. IV. Some Reactions of Silicon Hydrides in the Presence of Cobalt Carbonyls", Journal of American Chemical Society, vol. 89, no. 7, 1 March 1967 (1967-03-01), pages 1640-1647, XP55932151,

## Description

### TECHNICAL FIELD

This invention relates to a cobalt complex, a method for preparing the same, and a hydrosilylation reaction catalyst. More particularly, it relates to a cobalt complex having a specific isocyanide ligand and a bond to silicon, a method for preparing the same, and a hydrosilylation reaction catalyst comprising the cobalt complex.

### BACKGROUND ART

Hydrosilylation reaction which is an addition reaction of a Si-H functional compound to a compound having a carbon-carbon double or triple bond is a useful means for the synthesis of organosilicon compounds and an industrially important synthesis reaction.

Known catalysts for hydrosilylation reaction include Pt, Pd and Rh compounds. Among others, Pt compounds as typified by Speier catalyst and Karstedt catalyst are most commonly used.

While several problems arise from Pt compound-catalyzed reactions, one problem is that the addition of a Si-H functional compound to terminal olefin is accompanied by a side reaction, i.e. internal rearrangement of olefin. Since this system offers no addition reactivity to the internal olefin, unreacted olefin is left in the addition product. To drive the reaction to completion, the olefin must be initially used in excess by taking into account the fraction left as a result of side reaction.

Another problem is that the selectivity of α- and β-adducts is low depending on the type of olefin.

The most serious problem is that all the center metals Pt, Pd and Rh are quite expensive noble metal elements. As metal compound catalysts which can be used at lower cost are desired, a number of research works have been made thereon.

For example, Non-Patent Documents 1 to 6 report examples of reaction in the presence of cobalt-carbonyl complexes, e.g. Co₂(CO)₈. These complexes, however, are unsatisfactory in reaction yield and reaction molar ratio. Because these complexes possess highly toxic carbon monooxide, they must be handled and stored in an inert gas atmosphere and at low temperature.

Also Non-Patent Document 7 reports an exemplary reaction of olefin with trialkylsilane in the presence of a cobalt-carbonyl complex substituted with a trialkylsilyl group, with the results of low yield and low selectivity. Moreover, since the catalyst is quite reactive with air-borne oxygen and moisture, it must be handled in an inert gas atmosphere such as nitrogen or argon.

Non-Patent Document 8 reports reaction of olefin with trialkylsilane in the presence of a cobalt-phosphite complex coordinated with a cyclopentadienyl group. Non-Patent Document 9 reports reaction of olefin with trihydrophenylsilane in the presence of a cobalt complex coordinated with N-heterocyclocarbene. Because of low stability, these complex compounds require an inert gas atmosphere and a low temperature for handling and storage.

Non-Patent Document 10 reports reaction in the presence of a cobalt catalyst coordinated with a β-diketiminate group, but trihydrophenylsilane is a reaction substrate of low industrial worth. Also a reaction of 1-hexene with triethoxysilane is reported, which requires 2 mol% of the catalyst, indicating not so high catalytic activity.

Non-Patent Document 11 reports reaction in the presence of a cobalt catalyst coordinated with pyridine diimine. The catalyst precursor is easy to handle and the catalyst has high catalytic activity. However, since dehydrogenation silylation reaction takes place along with the relevant reaction, dehydrogenation silylated products are always present in traces, indicating low selectivity of the addition product.

Also Patent Documents 1 to 4 report iron, cobalt and nickel catalysts having terpyridine, bisiminopyridine, and bisiminoquinoline ligands. The complex has problems including industrial difficulty of synthesis of a catalyst precursor or synthesis of the complex catalyst from the precursor.

Patent Document 5 discloses a method of conducting reaction in the presence of an iron, cobalt or nickel complex catalyst having a bisiminoquinoline ligand, using Mg(butadiene) ·2THF or NaEt₃BH as the catalyst activator. The yield of the desired product is less than satisfactory.

The catalysts with their application to organopolysiloxanes being borne in mind include a catalyst having a phosphine ligand (Patent Document 6). However, reactivity is empirically demonstrated with respect to only platinum, palladium, rhodium and iridium which are expensive metal elements. Thus the method is not regarded cost effective.

In the Examples of Patent Documents 7 and 8, only well-known platinum catalysts are demonstrated to exert a catalytic effect while the structure which is combined with another metal to exert catalytic activity is indicated nowhere.

Patent Documents 9 to 11 disclose catalysts coordinated with carbene.

However, Patent Document 9 does not discuss whether or not the catalyst is effective to hydrosilylation reaction.

Patent Documents 10 and 11 disclose catalysts coordinated with carbene and vinylsiloxane, but describe only platinum catalysts in Examples.

In addition, the metal catalysts coordinated with carbene require careful handling because the complex compounds have low storage stability.

Patent Documents 12 to 14 disclose methods of mixing a metal salt with a compound which coordinates to the metal and using the product as a catalyst rather than the use of metal complexes as the catalyst. Although these Patent Documents describe the progress of hydrosilylation with several exemplary combinations, the yield and other data are described nowhere, and the extent to which the reaction takes place is not evident. Ionic salts or hydride reducing agents are used as the activator in all examples, whereas no catalytic activity is observed in almost all examples.

Recently, Patent Document 15 discloses a cobalt catalyst having diiminopyridine ligands and chelating alkenyl-modified silyl ligands which exhibits adequate air stability for handling and manipulation. However, the duration of air exposure described in Examples is as short as 5 or 10 minutes.

Non-Patent Document 12 reports a trimethylsilyl-cobalt complex having bulky isocyanide ligands. The complex is unstable because the number of ligands to cobalt is three. Also, the synthesis of the complex is complicated, only methyl is described as the organic group on silicon, and the catalysis to hydrosilylation reaction is investigated nowhere.

Non-Patent Document 13 reports hydrosilylation reaction catalysts using iron pivalate or cobalt pivalate and an isocyanide compound ligand. Neither catalyst is superior to Pt catalysts in catalytic activity. It is thus desired to develop a catalyst having higher catalytic activity.

Patent Documents 16 and 17 disclose hydrosilylation reaction catalysts having an isocyanide ligand. Despite the description that the complex as isolated may also be used, no cobalt-isocyanide complexes are empirically isolated. It is indefinite whether or not a complex having a bond to silicon is formed. Cobalt catalysts for hydrosilylation of alkynes are disclosed in Non-Patent Document 14.

No cobalt complexes having an isocyanide ligand and containing a bond to silicon have been reported except for Non-Patent Document 12, nor used as a catalyst for hydrosilylation reaction of alkene.

### PRIOR ART DOCUMENTS

### PATENT DOCUMENTS

Patent Document 1: JP-A 2012-532885
Patent Document 2: JP-A 2012-532884
Patent Document 3: JP-A 2013-544824
Patent Document 4: JP-A 2014-502271
Patent Document 5: JP-A 2014-503507
Patent Document 6: JP-A H06-136126
Patent Document 7: JP-A 2001-131231
Patent Document 8: JP 4007467
Patent Document 9: JP 3599669
Patent Document 10: JP 3854151
Patent Document 11: JP 4249702
Patent Document 12: WO 2013/043846
Patent Document 13: WO 2013/043783
Patent Document 14: WO 2013/043912
Patent Document 15: WO 2015/077302
Patent Document 16: WO 2016/024607
Patent Document 17: WO 2017/010366

### NON-PATENT DOCUMENTS

Non-Patent Document 1: A. J. Chalk, et al., J. Am. Chem. Soc., 1965, 87, 1133
Non-Patent Document 2: A. J. Chalk, et al., J. Am. Chem. Soc., 1967, 89, 1640
Non-Patent Document 3: A. J. Chalk, J. Organomet. Chem., 1970, 21, 207
Non-Patent Document 4: B. A. Izmailov, et al., J. Organomet. Chem., 1978, 149, 29
Non-Patent Document 5: N. Sonoda, et al., J. Org. Chem., 1987, 52, 4864
Non-Patent Document 6: S. Murai, et al., Chem. Lett., 2000, 14
Non-Patent Document 7: M. S. Wrighton, et al., Inorg. Chem., 1980, 19, 3858
Non-Patent Document 8: B. E. Grant, et al., J. Am. Chem. Soc., 1993, 115, 2151
Non-Patent Document 9: L. Deng, et al., Angew. Chem. Int. Ed., 2013, 52, 10845
Non-Patent Document 10: P. Hollad, et al., J. Am. Chem. Soc., 2015, 137, 13244
Non-Patent Document 11: P. J. Chirik, et al., ACS Catal., 2016, 6, 2632
Non-Patent Document 12: F. Figueroa, et al., Angew. Chem. Int. Ed., 2012, 51, 9412
Non-Patent Document 13: H. Nagashima, et al., J. Am. Chem. Soc., 2016, 138, 2480
Non-Patent Document 14: Alejandro Rivera-Hernàndez et al: "Regio- and Stereoselective Hydrosilylation of Unsymmetrical Alkynes Catalyzed by a Well-Defined, Low-Valent Cobalt Catalyst", Organic Letters, vol. 18, no. 17, 23 August 2016 (2016-08-23), pages 4242-4245

### SUMMARY OF THE INVENTION

### TECHNICAL PROBLEM

An object of the invention, which has been made under the above-mentioned circumstances, is to provide a cobalt complex which displays high catalytic activity to hydrosilylation reaction and has ease of handling and solubility in silicones; a method for easily preparing the complex; hydrosilylation reaction using the complex as a catalyst; and a method for preparing an addition compound by the hydrosilylation reaction.

### SOLUTION TO THE PROBLEM

Making extensive investigations to attain the above object, the inventors have found that a cobalt complex having a specific isocyanide ligand and a bond to silicon exhibits a high catalytic activity to hydrosilylation reaction to an aliphatic unsaturated bond, solubility in polysiloxanes, and stability in air which enables handling under atmospheric conditions. The invention is predicated on this finding.

The invention is defined below.
1. A cobalt complex having the following formula (1): 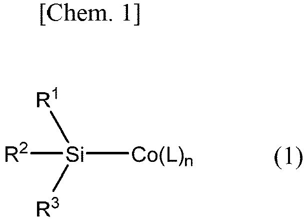
   wherein R¹ to R³ are each independently hydrogen or a C₁-C₃₀ monovalent organic group which may be substituted with halogen and which may be separated by at least one atom selected from oxygen, nitrogen, and silicon, at least one set of R¹ to R³ may bond together to form a C₁-C₃₀ crosslinking substituent which may be separated by at least one atom selected from oxygen, nitrogen, and silicon, L is each independently an isocyanide ligand having the following formula (2):

      CN-R⁴ (2)
   wherein R⁴ is a C₁-C₃₀ monovalent organic group which may be substituted with halogen and which may be separated by at least one atom selected from oxygen, nitrogen, sulfur, and silicon, and n is 4.
2. The cobalt complex of 1 wherein R¹ to R³ are each hydrogen or a monovalent hydrocarbon, organooxy, monoorgnoamino, diorgnoamino, monoorgnosiloxy, diorganosiloxy, triorgnosiloxy or polyorganosiloxane group of 1 to 30 carbon atoms.
3. The cobalt complex of 1 or 2 wherein R⁴ in formula (2) is a C₁-C₂₀ alkyl, C₃-C₂₀ cycloalkyl, C₆-C₃₀ aryl or C₇-C₃₀ alkylaryl group.
4. A catalyst comprising the cobalt complex of any one of 1 to 3, the catalyst having activity to hydrosilylation reaction.
5. A method for preparing a hydrosilylation reaction product, comprising the step of effecting hydrosilylation reaction of a compound containing an aliphatic unsaturated bond with a compound containing a Si-H bond in the presence of the catalyst of 4.
6. The method of 5 wherein the compound containing an aliphatic unsaturated bond is an olefin compound, or a silane compound or organopolysiloxane having a silicon-bonded alkenyl group.
7. A method for preparing the cobalt complex of any one of 1 to 3, comprising the step of reacting a cobalt-containing transition metal salt, an isocyanide compound having formula (2), and a hydrosilane compound having the following formula (3):

   H-SiR¹R²R³ (3)

   wherein R¹ to R³ are as defined above.
8. The method of 7 wherein the cobalt-containing transition metal salt is a cobalt carboxylate.
9. A method for preparing the cobalt complex of any one of 1 to 3, comprising the step of reacting a cobalt complex having the following formula (4):

   Co₂(L)₈ (4)

   wherein L is as defined above, with a hydrosilane compound having the following formula (3):

   H-SiR¹R²R³ (3)

   wherein R¹ to R³ are as defined above.

### ADVANTAGEOUS EFFECTS OF THE INVENTION

The cobalt complex of the invention is free of carbonyl ligands which are highly toxic to the human body, has thermal stability and stability in air, and is thus easy to handle.

The cobalt complex can be synthesized from a compound which is easy to handle, ensuring easy synthesis in high yields.

When the cobalt complex is used as a catalyst in hydrosilylation reaction of a compound containing an aliphatic unsaturated bond with a silane or (poly)siloxane having a Si-H group, the catalyst helps addition reaction run under such conditions as room temperature to 100°C or below. In particular, addition reaction with industrially useful (poly)siloxanes, trialkoxysilanes and dialkoxysilanes takes place effectively.

Because of good solubility in polysiloxanes, the cobalt complex displays high catalytic activity in the reaction of polysiloxanes. Particularly when the cobalt complex is used in the curing reaction of silicone, a polymer having a high degree of crosslinking is obtained as compared with the catalysts used in Non-Patent Document 13 and Patent Documents 16 and 17.

Additionally, when the cobalt complex is used as a catalyst in hydrosilylation reaction, the hydrosilylation reaction is promoted by light irradiation and proceeds effectively.

Although the cited documents referring to the relevant reaction describe that addition reaction to an unsaturated bond and reaction to produce an unsaturated bond-containing compound by dehydrogenation silylation reaction often take place at the same time, the use of the inventive catalyst ensures selective progress of addition reaction to an unsaturated bond. Additionally, in the reaction with an internal olefin which is difficult with the prior art catalysts, a product of addition reaction with the unsaturated bond migrating to the terminus is available. The invention is thus quite useful.

### BRIEF DESCRIPTION OF THE DRAWINGS

[FIG. 1] FIG. 1 is a x-ray crystal structure analysis diagram showing the structure of the cobalt complex obtained in Example 2.
[FIG. 2] FIG. 2 is a diagram of the ¹H-NMR spectrum of the cobalt complex obtained in Example 1.
[FIG. 3] FIG. 3 is a diagram showing the ¹³C-NMR spectrum of the cobalt complex obtained in Example 1.
[FIG. 4] FIG. 4 is a diagram showing the ¹H-NMR spectrum of the cobalt complex obtained in Example 2.
[FIG. 5] FIG. 5 is a diagram showing the ¹³C-NMR spectrum of the cobalt complex obtained in Example 2.
[FIG. 6] FIG. 6 is a diagram showing the ¹H-NMR spectrum of the cobalt complex obtained in Example 3.
[FIG. 7] FIG. 7 is a diagram showing the ¹³C-NMR spectrum of the cobalt complex obtained in Example 3.
[FIG. 8] FIG. 8 is a diagram showing the ¹H-NMR spectrum of the cobalt complex obtained in Example 4.
[FIG. 9] FIG. 9 is a diagram showing the ¹³C-NMR spectrum of the cobalt complex obtained in Example 4.

### DESCRIPTION OF EMBODIMENTS

Now the invention is described in detail.

The invention provides a cobalt complex having the following formula (1).

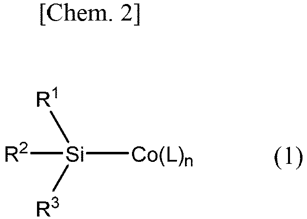

In formula (1), R¹ to R³ are each independently hydrogen or a C₁-C₃₀ monovalent organic group which may be substituted with halogen and which may have at least one intervening atom selected from oxygen, nitrogen, and silicon. At least one set (two or three) of R¹ to R³ may bond together to form a C₁-C₃₀ crosslinking substituent which may have at least one intervening atom selected from oxygen, nitrogen, and silicon. L is each independently an isocyanide ligand having the following formula (2):

CN-R⁴ (2)

wherein R⁴ is a C₁-C₃₀ monovalent organic group which may be substituted with halogen and which may have at least one intervening atom selected from oxygen, nitrogen, sulfur, and silicon, and n is 4.

R¹ to R³ each represent a C₁-C₃₀ monovalent organic group which may be substituted with halogen and which may have at least one intervening atom selected from oxygen, nitrogen, and silicon. Although the monovalent organic group is not particularly limited, preferred examples thereof include monovalent hydrocarbon, organooxy, monoorgnoamino, diorgnoamino, monoorgnosiloxy, diorganosiloxy, triorgnosiloxy, and polyorganosiloxane groups of 1 to 30 carbon atoms.

Exemplary of the halogen are fluorine, chlorine, bromine, and iodine.

Suitable C₁-C₃₀ monovalent hydrocarbon groups include alkyl, alkenyl, alkynyl, aryl, alkylaryl, and aralkyl groups.

The alkyl groups may be straight or branched, and are preferably C₁-C₂₀, more preferably C₁-C₁₀ alkyl groups. Examples include straight or branched alkyl groups such as methyl, ethyl, n-propyl, isopropyl, n-butyl, isobutyl, s-butyl, t-butyl, n-pentyl, n-hexyl, n-heptyl, n-octyl, 2-ethylhexyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, and n-eicosanyl; and cycloalkyl groups such as cyclopropyl, cyclobutyl, cyclopentyl, cyclohexyl, cycloheptyl, cyclooctyl, cyclononyl, norbornyl, and adamantyl.

The alkenyl groups are preferably C₂-C₂₀ alkenyl groups. Examples include ethenyl, n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl, n-1-pentenyl, n-1-decenyl, and n-1-eicosenyl.

The alkynyl groups are preferably C₂-C₂₀ alkynyl groups. Examples include ethynyl, n-1-propynyl, n-2-propynyl, n-1-butynyl, n-2-butynyl, n-3-butynyl, 1-methyl-2-propynyl, n-1-pentynyl, n-2-pentynyl, n-3-pentynyl, n-4-pentynyl, 1-methyl-n-butynyl, 2-methyl-n-butynyl, 3-methyl-n-butynyl, 1,1-dimethyl-n-propynyl, n-1-hexynyl, n-1-decynyl, n-1-pentadecynyl, and n-1-eicosynyl_

The aryl groups and alkylaryl groups are preferably C₆-C₂₀ aryl groups and C₇-C₂₀ alkylaryl groups, respectively. Examples include phenyl, 1-naphthyl, 2-naphthyl, anthryl, phenanthryl, o-biphenylyl, m-biphenylyl, p-biphenylyl, tryl, 2,6-dimethylphenyl, 2,6-diisopropylphenyl, and mesityl.

The aralkyl groups are preferably C₇-C₃₀, more preferably C₇-C₂₀ aralkyl groups. Examples include benzyl, phenylethyl, phenylpropyl, naphthylmethyl, naphthylethyl, and naphthylpropyl.

Suitable organooxy groups include, but are not limited to, alkoxy, aryloxy and aralkyloxy groups represented by RO wherein R is a substituted or unsubstituted C₁-C₃₀ alkyl group, C₆-C₃₀ aryl group or C₇-C₃₀ aralkyl group.

The alkoxy groups are preferably C₁-C₃₀, more preferably C₁-C₁₀ alkoxy groups, but not limited thereto. Examples include methoxy, ethoxy, n-propoxy, i-propoxy, c-propoxy, n-butoxy, i-butoxy, s-butoxy, t-butoxy, n-pentoxy, n-hexoxy, n-heptyloxy, n-octyloxy, n-nonyloxy, and n-decyloxy.

The aryloxy groups are preferably C₆-C₃₀, more preferably C₆-C₂₀ aryloxy groups, but not limited thereto. Examples include phenoxy, 1-naphthyloxy, 2-naphthyloxy, anthryloxy, and phenanthryloxy.

The aralkyloxy groups are preferably C₇-C₃₀, more preferably C₇-C₂₀ aralkyloxy groups, but not limited thereto. Examples include benzyloxy, phenylethyloxy, phenylpropyloxy, 1 or 2-naphthylmethyloxy, 1 or 2-naphthylethyloxy, and 1 or 2-naphthylpropyloxy.

The monoorganoamino group is preferably a group of RNH₂ wherein R is as defined above, though not limited thereto. The preferred carbon count of R is the same as in the alkoxy, aryloxy and aralkyloxy groups. Examples include straight or branched monoalkylamino groups such as methylamino, ethylamino, n-propylamino, isopropylamino, n-butylamino, isobutylamino, s-butylamino, t-butylamino, n-pentylamino, n-hexylamino, n-heptylamino, n-octylamino, n-nonylamino, n-decylamino, n-undecylamino, n-dodecylamino, n-tridecylamino, n-tetradeylamino, n-pentadecylamino, n-hexadecylamino, n-heptadecylamino, n-octadecylamino, n-nonadecylamino, and n-eicosanylamino; monocycloalkylamino groups such as cyclopropylamino, cyclobutylamino, cyclopentylamino, cyclohexylamino, cycloheptylamino, cyclooctylamino, and cyclononylamino; monoarylamino groups such as anilino and 1 or 2-naphthylamino; and monoaralkylamino groups such as benzylamino, phenylethylamino, phenylpropylamino, and 1 or 2-naphthylmethylamino.

The diorganoamino group is preferably a group of R₂NH wherein R is independently as defined above, though not limited thereto. The preferred carbon count of R is the same as in the alkoxy, aryloxy and aralkyloxy groups. Examples include straight or branched dialkylamino groups such as dimethylamino, diethylamino, di-n-propylamino, diisopropylamino, di-n-butylamino, diisobutylamino, di-s-butylamino, di-t-butylamino, di-n-pentylamino, di-n-hexylamino, di-n-heptylamino, di-n-octylamino, di-n-nonylamino, di-n-decylamino, di-n-undecylamino, di-n-dodecylamino, di-n-tridecylamino, di-n-tetradeylamino, di-n-pentadecylamino, di-n-hexadecylamino, di-n-heptadecylamino, di-n-octadecylamino, di-n-nonadecylamino, di-n-eicosanylamino, N-ethylmethylamino, N-isopropylmethylamino, and N-butylmethylamino; dicycloalkylamino groups such as dicyclopropylamino, dicyclobutylamino, dicyclopentylamino, dicyclohexylamino, dicycloheptylamino, dicyclooctylamino, dicyclononylamino, and cyclopentylcyclohexylamino; alkylarylamino groups such as N-methylanilino, N-ethylanilino, and N-n-propylanilino; diarylamino groups such as diphenylamino, 4,4'-bisnaphthylamino, and N-phenyl-1 or 2-naphthylamino; and diaralkylamino groups such as dibenzylamino, bis(phenylethyl)amino, bis(phenylpropyl)amino, and bis(1 or 2-naphthylmethyl)amino.

The monoorganosiloxy group is preferably a group of RH₂SiO wherein R is as defined above, though not limited thereto. The preferred carbon count of R is the same as in the alkoxy, aryloxy and aralkyloxy groups. Examples include straight or branched monoalkylsiloxy groups such as methylsiloxy, ethylsiloxy, n-propylsiloxy, isopropylsiloxy, n-butylsiloxy, isobutylsiloxy, s-butylsiloxy, t-butylsiloxy, n-pentylsiloxy, n-hexylsiloxy, n-heptylsiloxy, n-octylsiloxy, n-nonylsiloxy, and n-decylsiloxy; monocycloalkylsiloxy groups such as cyclopropylsiloxy, cyclobutylsiloxy, cyclopentylsiloxy, cyclohexylsiloxy, cycloheptylsiloxy, cyclooctylsiloxy, and cyclononylsiloxy; monoarylsiloxy groups such as phenylsiloxy and 1 or 2-naphthylsiloxy; and monoaralkylsiloxy groups such as benzylsiloxy, phenylethylsiloxy, phenylpropylsiloxy, and 1 or 2-naphthylmethylsiloxy.

The diorganosiloxy group is preferably a group of R₂HSiO wherein R is independently as defined above, though not limited thereto. The preferred carbon count of R is the same as in the alkoxy, aryloxy and aralkyloxy groups. Examples include straight or branched dialkylsiloxy groups such as dimethylsiloxy, diethylsiloxy, di-n-propylsiloxy, diisopropylsiloxy, di-n-butylsiloxy, diisobutylsiloxy, di-s-butylsiloxy, di-t-butylsiloxy, di-n-pentylsiloxy, di-n-hexylsiloxy, di-n-heptylsiloxy, di-n-octylsiloxy, di-n-nonylsiloxy, di-n-decylsiloxy, ethylmethylsiloxy, isopropylmethylsiloxy, and butylmethylsiloxy; dicycloalkylsiloxy groups such as dicyclopropylsiloxy, dicyclobutylsiloxy, dicyclopentylsiloxy, dicyclohexylsiloxy, dicycloheptylsiloxy, dicyclooctylsiloxy, dicyclononylsiloxy, and cyclopentylcyclohexylsiloxy; alkylarylsiloxy groups such as (methyl)phenylsiloxy, (ethyl)phenylsiloxy, and (n-propyl)phenylsiloxy; diarylsiloxy groups such as diphenylsiloxy, bis(1 or 2-naphthyl)siloxy, phenyl-1 or 2-naphthylsiloxy; and diaralkylsiloxy groups such as dibenzylsiloxy, bis(phenylethyl)siloxy, bis(phenylpropyl)siloxy, and bis(1 or 2-naphthylmethyl)siloxy.

The triorganosiloxy group is preferably a group of R₃SiO wherein R is independently as defined above, though not limited thereto. The preferred carbon count of R is the same as in the alkoxy, aryloxy and aralkyloxy groups. Examples include straight or branched trialkylsiloxy groups such as trimethylsiloxy, triethylsiloxy, tri-n-propylsiloxy, triisopropylsiloxy, tri-n-butylsiloxy, triisobutylsiloxy, tri-s-butylsiloxy, tri-t-butylsiloxy, tri-n-pentylsiloxy, tri-n-hexylsiloxy, tri-n-heptylsiloxy, tri-n-octylsiloxy, tri-n-nonylsiloxy, tri-n-decylsiloxy, ethyldimethylsiloxy, diisopropylmethylsiloxy, and dibutylmethylsiloxy; tricycloalkylsiloxy groups such as tricyclopropylsiloxy, tricyclobutylsiloxy, tricyclopentylsiloxy, tricyclohexylsiloxy, tricycloheptylsiloxy, tricyclooctylsiloxy, and tricyclononylsiloxy; alkylarylsiloxy groups such as (methyl)diphenylsiloxy, (ethyl)diphenylsiloxy, and (n-propyl)diphenylsiloxy; triarylsiloxy groups such as triphenylsiloxy, tri(1 or 2-naphthyl)siloxy, and diphenyl-1 or 2-naphthylsiloxy; and triaralkylsiloxy groups such as tribenzylsiloxy, tri(phenylethyl)siloxy, tri(phenylpropyl)siloxy, and tri(1 or 2-naphthylmethyl)siloxy.

Examples of the polyorganosiloxane group include straight or branched polyorganosiloxane groups having repeating units of dimethylsiloxy, phenylmethylsiloxy or diphenylsiloxy.

When at least one set of R¹ to R³ bond together to form a C₁-C₃₀ crosslinking substituent which may have at least one intervening atom selected from oxygen, nitrogen, and silicon, for example, a cyclic structure is formed from Si in formula (1) and a divalent hydrocarbon group (i.e. crosslinking group) (that is formed by one set of R¹ to R³ bonding together) which may be substituted with or separated by at least one silicon and at least one oxygen.

Examples of the cyclic structure that is formed by at least one set of R¹ to R³ bonding to Si in formula (1) include alicyclic compounds formed from hydrocarbon groups, such as silacyclopentane and silacyclohexane; alicyclic compounds derived from diols, such as 1,3-dioxa-2-silacyclopentane and 1,3-dioxa-2-silacyclohexane; monocyclic compounds including cyclic siloxane compounds such as 1,3,3,5,5,7,7-heptamethyltetrasiloxane; bridged bicyclic compounds formed from hydrocarbon groups, such as 1-silabicyclo[2.2.2]octane; bicyclic compounds derived from triols, such as 2,6,8-trioxa-1-silabicyclo[2.2.2]octane; and nitrogen-containing bicyclic compounds such as silatrane.

Among these, R¹ to R³ are preferably selected from C₁-C₁₀ alkyl, C₆-C₁₀ aryl, C₁-C₁₀ alkoxy, and trialkylsiloxy groups having three C₁-C₁₀ alkyl moieties, more preferably methyl, ethyl, phenyl, methoxy, ethoxy, trimethylsiloxy, and triethylsiloxy.

In formula (2), R⁴ is a C₁-C₃₀ monovalent organic group which may be substituted with halogen and which may have at least one intervening atom selected from oxygen, nitrogen, sulfur, and silicon. Examples of the halogen and examples of the C₁-C₃₀ monovalent organic group which may have at least one intervening atom selected from oxygen, nitrogen, and silicon are as exemplified above for R¹ to R³.

Examples of the C₁-C₃₀ monovalent organic group which may have at least one intervening sulfur include C₁-C₃₀ organothio groups, but are not limited thereto.

Suitable organothio groups correspond to the foregoing organooxy groups in which oxygen is replaced by sulfur.

Of these, R⁴ is preferably at least one hydrocarbon group selected from C₁-C₂₀ alkyl, C₃-C₂₀ cycloalkyl, C₆-C₃₀ aryl, and C₇-C₃₀ alkylaryl group, more preferably t-butyl, 1-adamantyl, mesityl, phenyl, 2,6-dimethylphenyl or 2,6-diisopropylphenyl.

The isocyanide compound of formula (2) may be available as a commercial product or synthesized by any well-known method. For example, a formylated product is obtained from an amine compound and formic acid, after which the formylated product is reacted with phosphoryl chloride in the presence of an organic amine to form the isocyanide compound (Synthesis method 1: see Organometallics, 2004, 23, 3976-3981). A formylated product is also obtained under mild conditions by forming an acetic formic anhydride from acetic anhydride and formic acid and reacting the acetic formic anhydride with an amine compound (Synthesis method 2: see Org. Synth., 2013, 90, 358-366). The resulting formylated product is converted to an isocyanide compound by the method described in Synthesis method 1.

Alternatively, the isocyanide compound may be synthesized by reacting an amine compound with dichlorocarbene without passing the step of formylation (Synthesis method 3: see Tetrahedron Letters, 1972, 17, 1637-1640).

Examples of the isocyanide compound include alkyl isocyanides such as methyl isocyanide, ethyl isocyanide, n-propyl isocyanide, cyclopropyl isocyanide, n-butyl isocyanide, isobutyl isocyanide, sec-butyl isocyanide, t-butyl isocyanide, n-pentyl isocyanide, isopentyl isocyanide, neopentyl isocyanide, n-hexyl isocyanide, cyclohexyl isocyanide, cycloheptyl isocyanide, 1,1-dimethylhexyl isocyanide, 1-adamantyl isocyanide, and 2-adamantyl isocyanide; aryl isocyanides such as phenyl isocyanide, 2-methylphenyl isocyanide, 4-methylphenyl isocyanide, 2,4-dimethylphenyl isocyanide, 2,5-dimethylphenyl isocyanide, 2,6-dimethylphenyl isocyanide, 2,4,6-trimethylphenyl isocyanide, 2,4,6-tri-t-butylphenyl isocyanide, 2,6-diisopropylphenyl isocyanide, 1-naphthyl isocyanide, 2-naphthyl isocyanide, and 2-methyl-1-naphthyl isocyanide; and aralkyl isocyanides such as benzyl isocyanide and phenylethyl isocyanide.

The cobalt complex of formula (1) may be obtained, for example, by reacting a cobalt-containing transition metal salt with a hydrosilane compound having the following formula (3):

H-SiR¹R²R³ (3)

wherein R¹ to R³ are as defined above in the presence of the isocyanide compound in an inert gas atmosphere such as argon gas.

Examples of the hydrosilane compound of formula (3) include silane compounds such as trimethoxysilane, triethoxysilane, triisopropoxysilane, dimethoxymethylsilane, diethoxymethylsilane, dimethoxyphenylsilane, diethoxyphenylsilane, methoxydimethylsilane, ethoxydimethylsilane, triphenylsilane, diphenyldisilane, phenyltrisilane, diphenylmethylsilane, phenyldimethylsilane, diphenylmethoxysilane, and diphenylethoxysilane; and siloxane compounds such as pentamethyldisiloxane, tetramethyldisiloxane, heptamethyltrisiloxane, octamethyltetrasiloxane, dimethylhydrogensiloxy-end-blocked dimethylpolysiloxane, dimethylhydrogensiloxy-end-blocked methylhydrogenpolysiloxane, trimethylsiloxy-end-blocked methylhydrogenpolysiloxane, dimethylhydrogensiloxy-end-blocked dimethylsiloxane/diphenylsiloxane copolymers, trimethylsiloxy-end-blocked dimethylsiloxane/methylhydrosiloxane copolymers, trimethylsiloxy-end-blocked dimethylsiloxane/diphenylsiloxane/methylhydrogensiloxane copolymers, dimethylhydrogensiloxy-end-blocked dimethylsiloxane/methylhydrogensiloxane copolymers, dimethylhydrogensiloxy-end-blocked dimethylsiloxane/methylhydrogensiloxane/diphenylsiloxane copolymers, hydroxyl-end-blocked dimethylsiloxane/methylhydrogensiloxane copolymers, and one end dimethylhydrogensiloxy-blocked dimethylpolysiloxane.

Although the cobalt-containing transition metal salt is not particularly limited, cobalt carboxylates are preferred.

Examples include cobalt carboxylates such as Co(pivalate)₂, Co(acetate)₂, Co(benzoate)₂, Co(2-ethylhexanoate)₂, and Co(stearate)₂.

In the above reaction, the isocyanide compound is preferably used in an amount of about 4 to about 10 moles per mole of the cobalt-containing transition metal salt, and the hydrosilane compound is preferably used in an amount of about 4 to about 20 moles per mole of the cobalt-containing transition metal salt.

Alternatively, the cobalt complex of formula (1) may be obtained by reacting a cobalt complex having the following formula (4):

Co₂(L)₈ (4)

wherein L is as defined above with a hydrosilane compound of formula (3).

The cobalt complex of formula (4) may be synthesized by well-known methods. For example, it may be synthesized by reacting a cobalt halide with a reducing agent such as sodium metal in an organic solvent in the presence of the isocyanide compound or by reacting dicobalt octacarbonyl complex with the isocyanide compound in an organic solvent at high temperature, under light irradiation or in the presence of a catalyst.

Also, the cobalt complex of formula (4) may be synthesized by reacting a cobalt complex having a replaceable ligand, for example, an olefin compound such as 1,5-cyclooctadiene or butadiene, or a phosphorus ligand such as trimethylphosphine with the isocyanide compound in an organic solvent.

In the above reaction, the hydrosilane compound of formula (3) is preferably used in an amount of about 2 to about 100 moles per mole of cobalt.

Although the synthesis of the cobalt complex through any of the above reactions may be performed in a solventless system, an organic solvent may be used if necessary.

Examples of the organic solvent, if used, include aliphatic hydrocarbons such as pentane, hexane, heptane, octane, and cyclohexane, ethers such as diethyl ether, diisopropyl ether, dibutyl ether, cyclopentyl methyl ether, tetrahydrofuran, and 1,4-dioxane; and aromatic hydrocarbons such as benzene, toluene, xylene, and mesitylene.

The reaction temperature may be set as appropriate in the range from the melting point to the boiling point of the organic solvent, preferably in the range of 10 to 100°C, and more preferably 30 to 80°C.

After the completion of reaction, the solvent is distilled off, whereupon the target compound may be isolated by well-known purifying means such as recrystallization. Without isolation, the cobalt complex as prepared may be used as a catalyst for the intended reaction.

When hydrosilylation reaction is carried out in the presence of the inventive cobalt complex as a catalyst, the amount of the catalyst used is not particularly limited. In order that the reaction take place under mild conditions at about 20°C to about 100°C to form the desired product in high yields, the catalyst is preferably used in an amount of at least 0.001 mol%, more preferably at least 0.01 mol%, and even more preferably at least 0.05 mol% of cobalt complex per mole of the compound as a substrate. Although no upper limit is imposed on the amount of the cobalt complex used, the upper limit is about 10 mol%, preferably 5 mol% per mole of the substrate, as viewed from the economic standpoint.

It is noted that in the hydrosilylation reaction catalyzed by the inventive cobalt complex, any well-known two-electron donative ligand may be used in combination as long as it does not detract from the catalytic activity.

Although the two-electron donative ligand is not particularly limited, ligands other than carbonyl are preferred, for example, ammonia molecules, ether compounds, amine compounds, phosphine compounds, phosphite compounds, and sulfide compounds.

Also an isocyanide compound may be further added as long as it does not detract from the catalytic activity. The amount of the isocyanide compound, if used, is preferably about 0.1 to about 5 mole equivalents relative to the inventive catalyst.

Although the conditions for hydrosilylation reaction catalyzed by the inventive cobalt complex are not particularly limited, typically the reaction temperature is about 10 to about 100°C, preferably 20 to 80°C and the reaction time is about 1 to about 48 hours.

Although the reaction may be performed in a solventless system, an organic solvent may be used if necessary.

Examples of the organic solvent, if used, include solvents as exemplified above for the cobalt complex synthesis.

When an organic solvent is used, the concentration, that is, molarity (M) of the catalyst is preferably 0.01 to 10 M, more preferably 0.1 to 5 M as viewed from the standpoints of catalytic activity and economy.

In the hydrosilylation reaction using the inventive cobalt complex as a catalyst, all components may be fed at a time, or components may be separately fed.

A hydrosilylation reaction product may be prepared by effecting hydrosilylation reaction of a compound containing an aliphatic unsaturated bond with a compound containing a Si-H bond in the presence of the inventive cobalt complex as a catalyst.

In the hydrosilylation reaction, the ratio of the compound containing an aliphatic unsaturated bond to the compound containing a Si-H bond is not particularly limited. The molar ratio of aliphatic unsaturated bond/Si-H bond is preferably from 1/10 to 10/1, more preferably from 1/5 to 5/1, and even more preferably from 1/3 to 3/1.

In the hydrosilylation reaction using the inventive cobalt complex as a catalyst, a compound containing an aliphatic unsaturated bond such as an olefin, silane or organopolysiloxane compound having an aliphatic unsaturated bond and a silane or organopolysiloxane compound having a Si-H bond should be used in combination, with no other limits being imposed on the structure of each compound.

Illustrative examples of the compound containing an aliphatic unsaturated bond are given below.

### (1) Hydrocarbon compound containing carbon-carbon unsaturated bond

Alkenes such as ethylene, propylene, butylene, isobutylene, hexene, octene, decene, dodecene, n-hexadecene, isohexadecene, n-octadecene, isooctadecene, norbornene, and trifluoropropene; alkynes such as ethyne, propyne, butyne, pentyne, hexyne, octyne, decyne, dodecyne, hexadecyne, and octadecyne; and aromatic alkenes such as styrene, 2-methylstyrene, 4-chlorostyrene, 4-methoxystyrene, α-methylstyrene, 4-methyl-α-methylstyrene, and allylbenzene.

### (2) Allyl ether compound

Allyl glycidyl ether, allyl glycol, allyl benzyl ether, diethylene glycol monoallyl ether, diethylene glycol allyl methyl ether, polyoxyethylene monoallyl ether, polyoxypropylene monoallyl ether, poly(oxyethylene/oxypropylene) monoallyl ether, polyoxyethylene diallyl ether, polyoxypropylene diallyl ether, and poly(oxyethylene/oxypropylene) diallyl ether.

### (3) Silane compound containing carbon-carbon unsaturated bond

Trimethylvinylsilane, triethylvinylsilane, trimethoxyvinylsilane, triethoxyvinylsilane, dimethoxymethylvinylsilane, diethoxymethylvinylsilane, methoxydimethylvinylsilane, ethoxydimethylvinylsilane, trimethoxyallylsilane, triethoxyallylsilane, triisopropoxyvinylsilane, phenyldimethoxyvinylsilane, phenyldiethoxyvinylsilane, diphenylmethoxyvinylsilane, diphenylethoxyvinylsilane, triphenylvinylsilane, and triphenylvinylsilane.

### (4) Siloxane compound containing carbon-carbon unsaturated bond

Pentamethylvinyldisiloxane, tetramethyldivinyldisiloxane, heptamethylvinyltrisiloxane, dimethyldiphenyldivinyldisiloxane, dimethylvinylsiloxy-end-blocked dimethylpolysiloxane, dimethylvinylsiloxy-end-blocked dimethylsiloxane/diphenylsiloxane copolymers, trimethylsiloxy-end-blocked dimethylsiloxane/methylvinylsiloxane copolymers, trimethylsiloxy-end-blocked dimethylsiloxane/diphenylsiloxane/methylvinylsiloxane copolymers, dimethylvinylsiloxy-end-blocked dimethylsiloxane/methylvinylsiloxane copolymers, dimethylvinylsiloxy-end-blocked dimethylsiloxane/methylvinylsiloxane/diphenylsiloxane copolymers, hydroxyl-blocked dimethylsiloxane/methylvinylsiloxane copolymers, and α-vinyldimethylpolysiloxane.

In the compound containing an aliphatic unsaturated bond, the unsaturated bond may be located at a molecular end or an internal position. Like hexadiene and octadiene, a plurality of unsaturated bonds may be included in the molecule.

Illustrative examples of the compound containing a Si-H bond are the following silanes and siloxanes.

### (1) Silanes

Trimethoxysilane, triethoxysilane, triisopropoxysilane, dimethoxymethylsilane, diethoxymethylsilane, dimethoxyphenylsilane, diethoxyphenylsilane, methoxydimethylsilane, ethoxydimethylsilane, triphenylsilane, diphenyldisilane, phenyltrisilane, diphenylmethylsilane, phenyldimethylsilane, diphenylmethoxysilane, and diphenylethoxysilane.

### (2) Siloxanes

Pentamethyldisiloxane, tetramethyldisiloxane, heptamethyltrisiloxane, octamethyltetrasiloxane, dimethylhydrogensiloxy-end-blocked dimethylpolysiloxane, dimethylhydrogensiloxy-end-blocked methylhydrogenpolysiloxane, trimethylsiloxy-end-blocked methylhydrogenpolysiloxane, dimethylhydrogensiloxy-end-blocked dimethylsiloxane/diphenylsiloxane copolymers, trimethylsiloxy-end-blocked dimethylsiloxane/methylhydrosiloxane copolymers, trimethylsiloxy-end-blocked dimethylsiloxane/diphenylsiloxane/methylhydrogensiloxane copolymers, dimethylhydrogensiloxy-end-blocked dimethylsiloxane/methylhydrogensiloxane copolymers, dimethylhydrogensiloxy-end-blocked dimethylsiloxane/methylhydrogensiloxane/diphenylsiloxane copolymers, hydroxyl-end-blocked dimethylsiloxane/methylhydrogensiloxane copolymers, and one end dimethylhydrogensiloxy-blocked dimethylpolysiloxane.

The hydrosilylation reaction using the inventive cobalt complex as a catalyst is applicable to all applications which are industrially implemented using prior art platinum catalysts, including preparation of silane coupling agents from an olefin compound having an aliphatic unsaturated bond and a silane compound having a Si-H bond, preparation of modified silicone oils from an olefin compound having an aliphatic unsaturated bond and an organopolysiloxane having a Si-H bond, and preparation of silicone cured products from an organopolysiloxane compound having an aliphatic unsaturated bond and an organopolysiloxane having a Si-H bond.

### EXAMPLES

Examples and Comparative Examples are given below for further illustrating the invention although the invention is not limited thereto.

All solvents were deoxygenated and dried by well-known methods before they were used in the preparation of complexes.

Unless otherwise stated, the resulting complexes were stored in a nitrogen gas atmosphere at 25°C before they were used in reaction.

Hydrosilylation reaction and solvent purification were always carried out in an inert gas atmosphere. Unless otherwise stated, the solvents and other ingredients were purified, dried and deoxygenated by well-known methods before they were used in various reactions.

Analyses of ¹H-, ¹³C- and ²⁹Si-NMR spectroscopy were performed by JNM-ECA 600 and JNM-LA 400 of JEOL Ltd. and Avance III of Bruker Corp., IR spectroscopy by FT/IR-550 of JASCO Corp., elemental analysis by 2400II/CHN of Perkin Elmer, and x-ray crystal structure analysis by FR-E+ (Mo-Kα-ray 0.71070 angstrom) of Rigaku Corp.

It is noted that in the chemical structural formulae shown below, hydrogen atoms are omitted according to the standard nomenclature. Me stands for methyl, Et for ethyl, tBu for t-butyl, Ph for phenyl, Ad for adamantyl, Mes for mesityl, and Piv for pivaloyl.

### [1] Synthesis of cobalt complex

### Example 1 Synthesis of cobalt complex {(EtO)₃Si}Co(CNtBu)₄

To a reactor, cobalt pivalate (26.2 mg, 0.1 mmol), benzene (100 µL), t-butyl isocyanide (67.8 µL, 0.6 mmol), and triethoxysilane (147 µL, 0.8 mmol) were fed in the described order, followed by stirring at 25°C for 12 hours. From the reaction solution, the solvent and the residual triethoxysilane were distilled off under reduced pressure. The dry product was dissolved in pentane (~2 mL), which was cooled to -35°C for recrystallization, yielding {(EtO)₃Si}Co(CNtBu)₄ (38.6 mg, 70%).

Mp = 150°C (dec.)

| | |
|---|---|
| ¹H-NMR (400 MHz, benzene-d₆) δ: | 4.37 (q, J=6.9, 6H), 1.57 (t, J=6.9, 9H), 1.24 (s, 36H) |
| ¹³C-NMR (100 MHz, benzene-d₆) δ: | 58.0, 55.1, 31.1, 19.5 |
| ²⁹Si-NMR (119 MHz, benzene-d₆) δ: | 0.3 |
| IR (ATR): | v CN = 2120, 2030, 2008, 1982 cm⁻¹. |
| Anal. calcd. for C₂₆H₅₁O₃N₄CoSi: | C56.29, H9.27, N10.10; found: C56.18, H9.47, N9.95 |

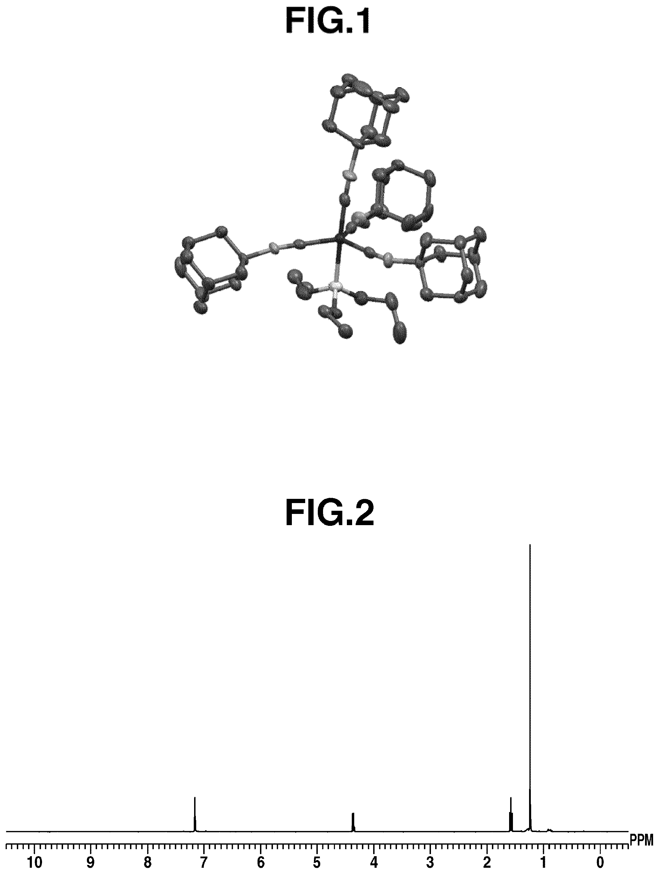

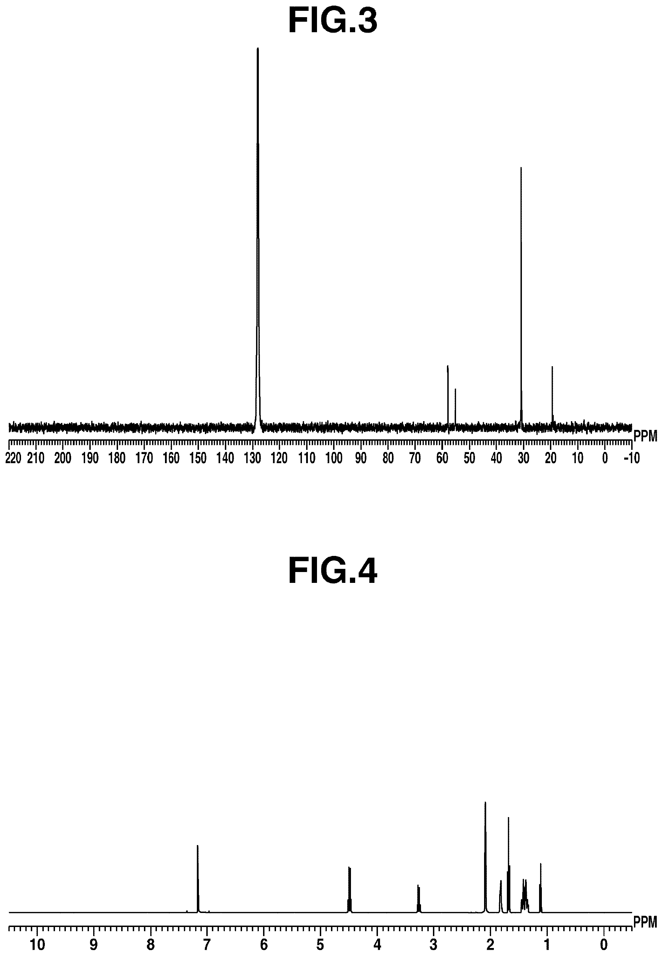

The ¹H-NMR spectrum of the cobalt complex in Example 1 is shown in FIG. 2, and the ¹³C-NMR spectrum is shown in FIG. 3.

### Example 2 Synthesis (1) of cobalt complex {(EtO)₃Si}Co(CNAd)₄

To a reactor, cobalt pivalate (26.2 mg, 0.1 mmol), benzene (100 µL), adamantyl isocyanide (96.8 mg, 0.6 mmol), and triethoxysilane (147 µL, 0.8 mmol) were fed in the described order, followed by stirring at 25°C for 12 hours. From the reaction solution, the solvent and the residual triethoxysilane were distilled off under reduced pressure. The dry product was dissolved in diethyl ether (~2 mL), which was cooled to -35°C for recrystallization, yielding {(EtO)₃Si}Co(CNAd)₄ (66.8 mg, 77%).

Mp = 200°C (dec.)

| | |
|---|---|
| ¹H-NMR (400 MHz, benzene-d₆) δ: | 4.49 (q, J=6.9, 6H), 2.10 (br, 24H), 1.81 (br, 12H), |
| | 1.67 (t, J=6.9, 9H), 1.40 (m, 24H) |
| ¹³C-NMR (100 MHz, benzene-d₆) δ: | 171.2, 58.2, 55.6, 44.5, 36.1, 29.6, 19.7 |
| ²⁹Si-NMR (119 MHz, benzene-d₆) δ: | 0.6 |
| IR (ATR): v CN = 2143, 2109, 1990, | 1955 cm⁻¹ |
| Anal. calcd. for C₅oH₇₅O₃N₄CoSi: | C69.25, H8.72, N6.47; found: C69.46, H9.14, N6.08 |

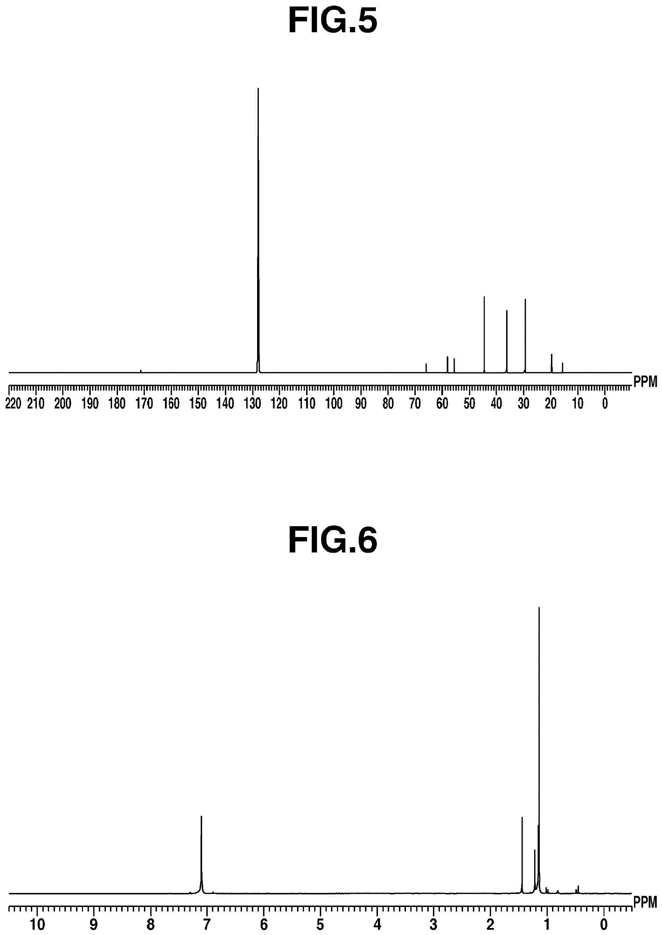

The result of x-ray crystallography analysis on the cobalt complex in Example 2 is depicted in FIG. 1, the ¹H-NMR spectrum is shown in FIG. 4, and the ¹³C-NMR spectrum is shown in FIG. 5.

### Example 3 Synthesis of cobalt complex {Me₂(Me₃SiO)Si}Co(CNtBu)₄

To a reactor, cobalt pivalate (26.2 mg, 0.1 mmol), benzene (100 µL), t-butylisocyanide (67.8 µL, 0.6 mmol), and 1,1,1,3,3-pentamethyldisiloxane (157 µL, 0.8 mmol) were fed in the described order, followed by stirring at 25°C for 12 hours. From the reaction solution, the solvent and the residual 1,1,1,3,3-pentamethyldisiloxane were distilled off under reduced pressure. The dry product was dissolved in pentane (~2 mL), which was cooled to -35°C for recrystallization, yielding {Me₂(Me₃SiO)Si}Co(CNtBu)₄ (30.0 mg, 56%).

Mp = 120°C (dec.)

| | |
|---|---|
| ¹H-NMR (400 MHz, benzene-d₆) δ: | 1.50 (s, 9H), 1.27 (s, 6H), 1.20 (s, 36H) |
| ¹³C-NMR (100 MHz, benzene-d₆) δ: | 170.9, 55.0, 31.1, 28.2, 8.75 |
| ²⁹Si-NMR (119 MHz, benzene-d₆) δ: | 45.7, 0.2 |
| IR (ATR): | v CN = 2121, 1990, 1939 cm⁻¹ |
| Anal. calcd. for C₂₅H₅₁O₃N₄CoSi₂: | C55.73, H9.54, N10.40; found: C55.93, H9.67, N10.10 |

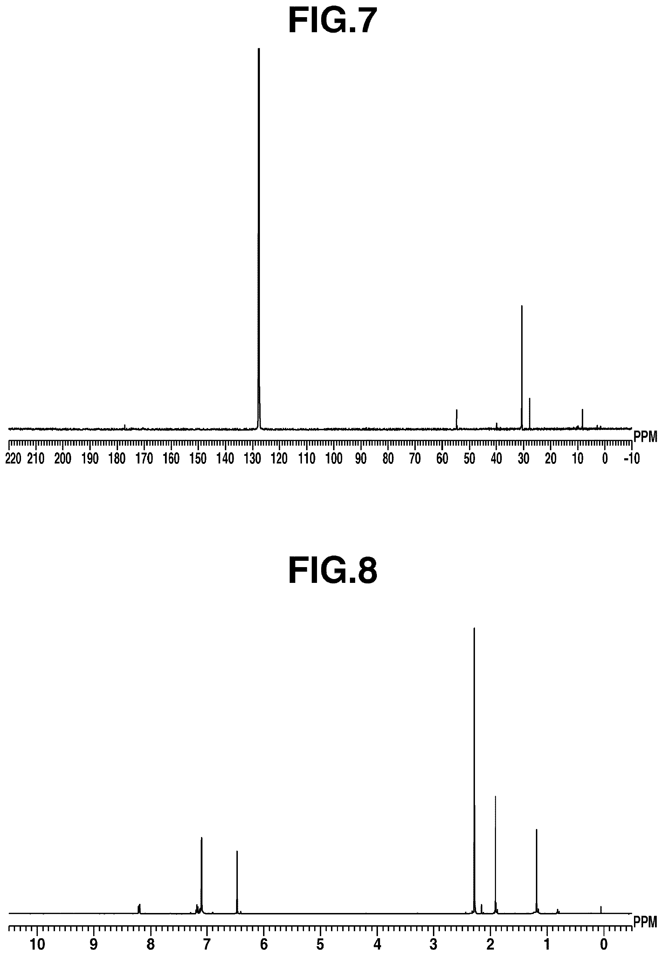

The ¹H-NMR spectrum of the cobalt complex in Example 3 is shown in FIG. 6, and the ¹³C-NMR spectrum is shown in FIG. 7.

### Example 4 Synthesis of cobalt complex {PhMe₂Si}Co(CNMes)₄

To a reactor, Co₂(CNMes)₈ (100 mg, 0.078 mmol) and dimethylphenylsilane (3 mL, 19.4 mmol) were fed in the described order, followed by stirring at 25°C for 12 hours. From the reaction solution, the residual phenyldimethylsilane was distilled off under reduced pressure. The dry product was dissolved in pentane (~3 mL), which was cooled to -35°C for recrystallization, yielding {PhMe₂Si}Co(CNMes)₄ (50 mg, 32%).

Mp = 146-147°C (dec.)

| | |
|---|---|
| ¹H-NMR (400 MHz, benzene-d₆) δ: | 8.26 (m, 2H), 7.18-7.26 (m, 3H), 6.54 (s, 8H), 2.35 (s, 24H), 1.25 (s, 6H) |
| ¹³C-NMR (100 MHz, benzene-d₆) δ: | 180.6, 148.9, 135.4, 135.2, 134.1, 129.4, 128.7, 127.3, 127.2, 21.0, 19.3, 7.8 |
| ²⁹Si-NMR (119 MHz, benzene-d₆) δ: | 29.9 |
| IR (ATR): v CN = 2110, 2039, 1988, | 1950 cm⁻¹ |
| Anal. calcd. for C₄₈H₅₅N₄CoSi: | C74.39, H7.15, N7.23; found: C74.96, H6.88, N7.52 |

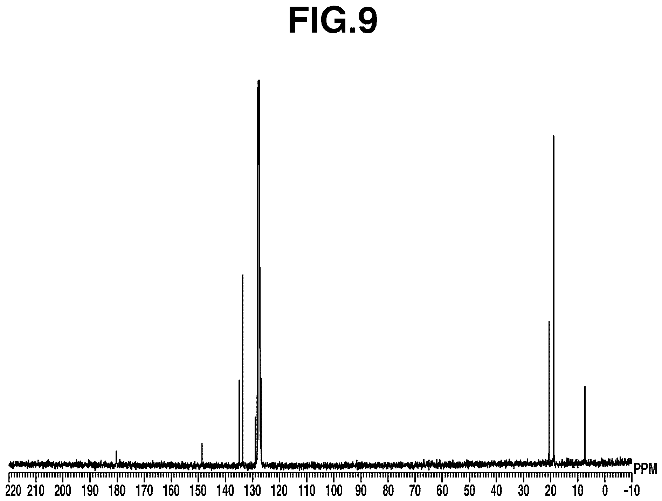

The ¹H-NMR spectrum of the cobalt complex in Example 4 is shown in FIG. 8, and the ¹³C-NMR spectrum is shown in FIG. 9.

### Example 5 Synthesis (2) of cobalt complex {(EtO)₃Si}Co(CNAd)₄

To a reactor, Co₂(CNAd)₈ (100 mg, 0.071 mmol) and triethoxysilane (1 mL, 5.4 mmol) were fed in the described order, followed by stirring at 25°C for 12 hours. From the reaction solution, the residual triethoxysilane was distilled off under reduced pressure. The dry product was dissolved in diethyl ether (~2 mL), which was cooled to -35°C for recrystallization, yielding {(EtO)₃Si}Co(CNAd)₄ (63.2 mg, 50%).

### [2] Hydrosilylation reaction using cobalt complex

### Hydrosilylation reaction of α-methylstyrene with 1,1,1,3,3-pentamethyldisiloxane

### Example 6

A reactor was charged with {(EtO)₃Si}Co(CNtBu)₄ (5.5 mg, 0.01 mmol) in Example 1, α-methylstyrene (1.29 mL, 10 mmol), and 1,1,1,3,3-pentamethyldisiloxane (2.54 mL, 13 mmol), which were stirred at 80°C for 24 hours. After the completion of reaction, the product was analyzed by ¹H-NMR spectroscopy to determine its structure and yield. There was observed a multiplet at 0.94 ppm indicative of the signal assigned to proton on silicon-adjoining carbon in the desired product, from which a yield was computed. The results are shown in Table 1.

| | |
|---|---|
| ¹H-NMR (396 MHz, CDCl₃) δ: | 7.27 (t, J=6.8, 2H), 7.21 (d, J=6.8, 2H), 7.15 (t, J=6.8, 1H), |
| | 2.91 (sext, J=6.8, 1H), 1.28 (d, J=6.8, 3H), |
| | 0.90-0.98 (m, 2H), 0.05 (s, 9H), -0.05 (s, 3H), -0.07 (s, 3H) |

### Examples 7 to 9

Reaction was performed as in Example 1 except that the cobalt complex (0.01 mmol) in Table 1 was used as the catalyst instead of {(EtO)₃Si}Co(CNtBu)₄ and the reaction temperature and time in Table 1 were used. The results are shown in Table 1.

### Example 10 Hydrosilylation using air-exposed complex

A reactor was charged with {(EtO)₃Si}Co(CNAd)₄ (8.7 mg, 0.01 mmol) in Example 2. The reactor was taken out of the glove box and exposed to air for 1 hour. The reactor was taken in the glove box again, after which α-methylstyrene (1.29 mL, 10 mmol) and 1,1,1,3,3-pentamethyldisiloxane (2.54 mL, 13 mmol) were fed to the reactor and stirred at 50°C for 24 hours. After the completion of reaction, the product was analyzed by ¹H-NMR spectroscopy to determine its structure and yield. There was observed a multiplet at 0.94 ppm indicative of the signal assigned to proton on silicon-adjoining carbon in the desired product, from which a yield was computed. The results are shown in Table 1.

### Example 11 Hydrosilylation using air-exposed complex solution

Into a reactor, {(EtO)₃Si}Co(CNAd)₄ (87 mg, 0.1 mmol) in Example 2 was fed and dissolved in toluene (1 mL) to prepare a 0.1 mol/L complex solution. A 100-µL portion (cobalt catalyst content 0.01 mmol) of the solution was sampled and transferred to another reactor, which was taken out of the glove box and exposed to air for 5 minutes. The reactor was taken in the glove box again, after which α-methylstyrene (1.29 mL, 10 mmol) and 1,1,1,3,3-pentamethyldisiloxane (2.54 mL, 13 mmol) were fed to the reactor and stirred at 50°C for 24 hours. After the completion of reaction, the product was analyzed by ¹H-NMR spectroscopy to determine its structure and yield. There was observed a multiplet at 0.94 ppm indicative of the signal assigned to proton on silicon-adjoining carbon in the desired product, from which a yield was computed. The results are shown in Table 1.

### Example 12 Hydrosilylation using complex stored long as solution under nitrogen

Into a reactor, {(EtO)₃Si}Co(CNAd)₄ (87 mg, 0.1 mmol) in Example 2 was fed and dissolved in toluene (1 mL) to prepare a 0.1 mol/L complex solution. A 100-µL portion (cobalt catalyst content 0.01 mmol) of the solution was sampled and transferred to another reactor, which was allowed to stand at room temperature for 24 hours in a nitrogen-purged glove box. Thereafter, α-methylstyrene (1.29 mL, 10 mmol) and 1,1,1,3,3-pentamethyldisiloxane (2.54 mL, 13 mmol) were fed to the reactor. The reactor was taken out of the glove box and the contents were stirred at 50°C for 24 hours. After the completion of reaction, the product was analyzed by ¹H-NMR spectroscopy to determine its structure and yield. There was observed a multiplet at 0.94 ppm indicative of the signal assigned to proton on silicon-adjoining carbon in the desired product, from which a yield was computed. The results are shown in Table 1.

**Table 1**

| Example | Catalyst | Temp. (°C) | Time (hr) | Conversion (%) | Yield (%) |
|---|---|---|---|---|---|
| 6 | {(EtO)₃Si}Co(CNtBu)₄ | 50 | 24 | > 99 | > 99 |
| 7 | {(EtO)₃Si}Co(CNAd)₄ | 80 | 24 | > 99 | >9 9 |
| 8 | {Me₂(Me₃SiO)Si}Co(CNtBu)₄ | 50 | 24 | 98 | 98 |
| 9 | (PhMe₂Si)Co(CNMes)₄ | 25 | 72 | 93 | 93 |
| 10 | {(EtO)₃Si}Co(CNAd)₄ (1 hr air exposure in solid state) | 80 | 24 | > 99 | > 99 |
| 11 | {(EtO)₃Si}Co(CNAd)₄ (5 min air exposure in solution state) | 80 | 24 | > 99 | > 99 |
| 12 | {(EtO)₃Si}Co(CNAd)₄ (RT/24 hr storage under nitrogen in solution state) | 80 | 24 | > 99 | > 99 |

### Example 13 Hydrosilylation reaction under light irradiation

A reactor was charged with {(EtO)₃Si}Co(CNtBu)₄ (5.5 mg, 0.01 mmol) in Example 1, α-methylstyrene (1.29 mL, 10 mmol), and 1,1,1,3,3-pentamethyldisiloxane (2.54 mL, 13 mmol). While the reactor was irradiated with light from a high-pressure mercury lamp (UM-453B-A, 450 W, by Ushio Inc.), the contents were stirred at room temperature for 24 hours. After the completion of reaction, the product was analyzed by ¹H-NMR spectroscopy to determine its structure and yield. There was observed a multiplet at 0.94 ppm indicative of the signal assigned to proton on silicon-adjoining carbon in the desired product, from which a yield was computed. The results are shown in Table 2.

### Reference Example 1 Hydrosilylation reaction under light-blocked conditions

A reactor was charged with {(EtO)₃Si}Co(CNtBu)₄ (5.5 mg, 0.01 mmol) in Example 1, α-methylstyrene (1.29 mL, 10 mmol), and 1,1,1,3,3-pentamethyldisiloxane (2.54 mL, 13 mmol). While the whole reactor was covered with aluminum foil to block light entry, the contents were stirred at room temperature for 24 hours. After the completion of reaction, the product was analyzed by ¹H-NMR spectroscopy to determine its structure and yield. There was observed a multiplet at 0.94 ppm indicative of the signal assigned to proton on silicon-adjoining carbon in the desired product, from which a yield was computed. The results are shown in Table 2.

**Table 2**

| | Conversion (%) | Yield (%) |
|---|---|---|
| Example 13 | 65 | 65 |
| Reference Example 1 | 5 | 5 |

### Hydrosilylation of α-methylstyrene with 1,1,1,3,5,5,5-heptamethyltrisiloxane

### Example 14

A reactor was charged with {(EtO)₃Si}Co(CNtBu)₄ (5.5 mg, 0.01 mmol) in Example 1, α-methylstyrene (129 µL, 1.0 mmol), and 1,1,1,3,5,5,5-heptamethyltrisiloxane (351 µL, 1.3 mmol), which were stirred at 80°C for 24 hours. After the completion of reaction, the product was analyzed by ¹H-NMR spectroscopy to determine its structure and yield. There was observed a multiplet at 0.88 ppm indicative of the signal assigned to proton on silicon-adjoining carbon in the desired product, from which a yield was computed. The results are shown in Table 3.

| | |
|---|---|
| ¹H-NMR (396 MHz, CDCl₃) δ: | 7.27 (t, J=6.8, 2H), 7.21 (d, J=6.8, 2H), 7.16 (t, J=6.8, 1H), |
| | 2.92 (sext, J=6.8, 1H), 1.28 (d, J=6.8, 3H), |
| | 0.82-0.94 (m, 2H), 0.09 (s, 9H), 0.07 (s, 9H), -0.12 (s, 3H) |

### Hydrosilylation of α-methylstyrene with ethoxy(dimethyl)silane

### Example 15

A reactor was charged with {(EtO)₃Si}Co(CNtBu)₄ (5.5 mg, 0.01 mmol) in Example 1, α-methylstyrene (129 µL, 1.0 mmol), and ethoxy(dimethyl)silane (179 µL, 1.3 mmol), which were stirred at 80°C for 24 hours. After the completion of reaction, the product was analyzed by ¹H-NMR spectroscopy to determine its structure and yield. There was observed a sextet at 2.91 ppm indicative of the signal assigned to proton on phenyl-adjoining carbon in the desired product, from which a yield was computed. The results are shown in Table 3.

| | |
|---|---|
| ¹H-NMR (396 MHz, CDCl₃) δ: | 7.27 (t, J=6.8, 2H), 7.21 (d, J=6.8, 2H), |
| | 7.15 (t, J=6.8, 1H), 3.59 (q, J=6.8, 2H), |
| | 2.91 (sext, J=6.8, 1H), 1.29 (d, J=6.8, 3H), |
| | 1.15 (t, J=6.8, 3H), 1.03 (d, J=6.8, 2H) |

### Hydrosilylation of α-methylstyrene with diethoxy(methyl)silane

### Example 16

A reactor was charged with {(EtO)₃Si}Co(CNtBu)₄ (5.5 mg, 0.01 mmol) in Example 1, α-methylstyrene (129 µL, 1.0 mmol), and diethoxy(methyl)silane (175 mg, 1.3 mmol), which were stirred at 120°C for 24 hours. After the completion of reaction, the product was analyzed by ¹H-NMR spectroscopy to determine its structure and yield. There was observed a sextet at 2.96 ppm indicative of the signal assigned to proton on phenyl-adjoining carbon in the desired product, from which a yield was computed. The results are shown in Table 3.

| | |
|---|---|
| ¹H-NMR (396 MHz, CDCl₃) δ: | 7.27 (t, J=6.8, 2H), 7.21 (d, J=6.8, 2H), |
| | 7.15 (t, J=6.8, 1H), 3.63-3.70 (m, 4H), |
| | 3.00 (sext, J=6.8, 1H), 1.32 (d, J=6.8, 3H), |
| | 1.21 (t, J=6.8, 3H), 1.15 (t, J=6.8, 3H), |
| | 1.03 (d, J=6.8, 2H), -0.08 (s, 3H) |

### Hydrosilylation of α-methylstyrene with triethoxysilane

### Example 17

A reactor was charged with {(EtO)₃Si}Co(CNtBu)₄ (5.5 mg, 0.01 mmol) in Example 1, α-methylstyrene (129 µL, 1.0 mmol), and triethoxysilane (213 mg, 1.3 mmol), which were stirred at 120°C for 24 hours. After the completion of reaction, the product was analyzed by ¹H-NMR spectroscopy to determine its structure and yield. There was observed a sextet at 3.00 ppm indicative of the signal assigned to proton on phenyl-adjoining carbon in the desired product, from which a yield was computed. The results are shown in Table 3.

| | |
|---|---|
| ¹H-NMR (396 MHz, CDCl₃) δ: | 7.27 (t, J=6.8, 2H), 7.21 (d, J=6.8, 2H), 7.15 (t, J=6.8, 1H), 3.73 (q, J=6.8, 6H), 2.96 (sext, J=6.8, 1H), 1.31 (d, J=6.8, 3H), 1.18 (m, J=6.8, 9H), 1.03 (d, J=6.8, 2H) |

### Hydrosilylation of α-methylstyrene with dimethylphenylsilane

### Example 18

A reactor was charged with {(EtO)₃Si}Co(CNtBu)₄ (5.5 mg, 0.01 mmol) in Example 1, α-methylstyrene (129 µL, 1.0 mmol), and dimethylphenylsilane (177 mg, 1.3 mmol), which were stirred at 80°C for 24 hours. After the completion of reaction, the product was analyzed by ¹H-NMR spectroscopy to determine its structure and yield. There was observed a sextet at 2.85 ppm indicative of the signal assigned to proton on phenyl-adjoining carbon in the desired product, from which a yield was computed. The results are shown in Table 3.

| | |
|---|---|
| ¹H-NMR (400 MHz, CDCl₃) δ: | 0.09 (s, 3H), 0.15 (s, 3H), 1.12-1.27 (m, 5H), 2.85 (sext, J=6.8Hz, 1H), 7.16-7.46 (m, 10H) |

**Table 3**

| Example | Hydrosilane | Temp. (°C) | Time (hr) | Conversion (%) | Yield (%) |
|---|---|---|---|---|---|
| 14 | 1,1,1,3,5,5,5-heptamethyltrisiloxane | 80 | 24 | 95 | 95 |
| 15 | ethoxy(dimethyl)silane | 80 | 24 | > 99 | > 99 |
| 16 | diethoxy(methyl)silane | 80 | 24 | > 99 | > 99 |
| 17 | triethoxysilane | 120 | 24 | 93 | 93 |
| 18 | dimethylphenylsilane | 80 | 24 | > 99 | > 99 |

### Hydrosilylation of 1-octene with 1,1,1,3,3-pentamethyldisiloxane

### Example 19

A reactor was charged with {(EtO)₃Si}Co(CNtBu)₄ (5.5 mg, 0.01 mmol) in Example 1, 1-octene (157 µL, 1.0 mmol), and 1,1,1,3,3-pentamethyldisiloxane (254 µL, 1.3 mmol), which were stirred at 50°C for 24 hours. After the completion of reaction, the product was analyzed by ¹H-NMR spectroscopy to determine its structure and yield. There was observed a multiplet at 0.90 ppm indicative of the signal assigned to proton on silicon-adjoining carbon in the desired product, from which a yield was computed. The results are shown in Table 4.

| | |
|---|---|
| ¹H-NMR (396 MHz, CDCl₃) δ: | 7.24-7.29 (m, 2H), 7.13-7.22 (m, 3H), 2.61-2.68 (m, 2H), 0.86-0.92 (m, 2H), 0.08 (s, 9H), 0.07 (s, 6H) |

### Hydrosilylation of 2-octene with 1,1,1,3,3-pentamethyldisiloxane

### Example 20

A reactor was charged with {(EtO)₃Si}Co(CNtBu)₄ (5.5 mg, 0.01 mmol) in Example 1, 2-octene (157 µL, 1.0 mmol), and 1,1,1,3,3-pentamethyldisiloxane (254 µL, 1.3 mmol), which were stirred at 50°C for 24 hours. After the completion of reaction, the product was analyzed by ¹H-NMR spectroscopy to determine its structure and yield. There was observed a multiplet at 0.90 ppm indicative of the signal assigned to proton on silicon-adjoining carbon in the desired product, from which a yield was computed. The results are shown in Table 4.

### Hydrosilylation of norbornene with 1,1,1,3,3-pentamethyldisiloxane

### Example 21

A reactor was charged with {(EtO)₃Si}Co(CNtBu)₄ (5.5 mg, 0.01 mmol) in Example 1, norbornene (94.1 mg, 1.0 mmol), and 1,1,1,3,3-pentamethyldisiloxane (254 µL, 1.3 mmol), which were stirred at 80°C for 24 hours. After the completion of reaction, the product was analyzed by ¹H-NMR spectroscopy to determine its structure and yield. There was observed a multiplet at 0.49 ppm indicative of the signal assigned to proton on silicon-adjoining carbon in the desired product, from which a yield was computed. The results are shown in Table 4.

| | |
|---|---|
| ¹H-NMR (396 MHz, CDCl₃) δ: | -0.01 (s, 3H), 0.00 (s, 3H), 0.04 (s, 0.38H), 0.06 (s, 9H), 0.47-0.51 (m, 1H), 0.80-0.87 (m, 0.16H), 1.06-1.10 (m, 1.26H), 1.18-1.23 (m, 3.71H), 1.32-1.36 (m, 1.25H), 1.37-1.49 (m, 1.24H), 1.51-1.54 (m, 2.39H), 1.59-1.69 (m, 0.19H), 2.19-2.32 (m, 2.29H) |

### Hydrosilylation of allyl glycidyl ether with 1,1,1,3,3-pentamethyldisiloxane

### Example 22

A reactor was charged with {(EtO)₃Si}Co(CNtBu)₄ (5.5 mg, 0.01 mmol) in Example 1, allyl glycidyl ether (118 µL, 1.0 mmol), and 1,1,1,3,3-pentamethyldisiloxane (254 µL, 1.3 mmol), which were stirred at 80°C for 24 hours. After the completion of reaction, the product was analyzed by ¹H-NMR spectroscopy to determine its structure and yield. There was observed a multiplet at 0.51 ppm indicative of the signal assigned to proton on silicon-adjoining carbon in the desired product, from which a yield was computed. The results are shown in Table 4.

| | |
|---|---|
| ¹H-NMR (396 MHz, CDCl₃) δ: | 3.71 (dd, J=11.6, J=3.9, 1H), 3.37-3.51 (m, 3H), 3.26 (dt, J=2.9, J=6.3, 1H), 2.62 (t, J=4.4, 1H), 2.62 (q, J=2.9, 1H), 1.59-1.65 (m, 2H), 0.49-0.53 (m, 2H), 0.06 (s, 9H) |

**Table 4**

| Example | Alkene | Temp. (°C) | Conversion (%) | Yield (%) |
|---|---|---|---|---|
| 19 | 1-octene | 50 | >99 | 93 |
| 20 | 2-octene | 50 | 91 | 91 |
| 21 | norbornene | 80 | 97 | 89 |
| 22 | allyl glycidyl ether | 80 | >99 | 51 |

### Hydrosilylation reaction of α-methylstyrene with both end dimethylhydrogensiloxy-blocked polydimethylsiloxane

### Example 23

A reactor was charged with {(EtO)₃Si}Co(CNtBu)₄ (5.5 mg, 0.01 mmol) in Example 1, α-methylstyrene (1.53 mg, 13 mmol), and both end dimethylhydrogensiloxy-blocked polydimethylsiloxane having a degree of polymerization of 18 (7.4 g, 5.0 mmol), which were stirred at 80°C for 24 hours. After the completion of reaction, the product was analyzed by ¹H-NMR spectroscopy to determine its structure and yield. There was observed a multiplet at 0.98 ppm indicative of the signal assigned to proton on silicon-adjoining carbon in the desired product, from which a yield was computed. The results are shown in Table 5.

| | |
|---|---|
| ¹H-NMR (396 MHz, CDCl₃) δ: | 7.27 (t, J=6.8, 2H), 7.21 (d, J=6.8, 2H), 7.15 (t, J=6.8, 1H), |
| | 2.92 (sext, J=6.8, 1H), 1.28 (d, J=6.8, 3H), |
| | 0.90-0.98 (m, 2H), 0.05 (s), -0.05 (s), -0.07 (s) |

### Examples 24 and 25

Reaction was performed as in Example 23 except that the cobalt complex (0.01 mmol) in Table 2 was used as the catalyst instead of {(EtO)₃Si}Co(CNtBu)₄ and the reaction temperature in Table 5 was used. The results are shown in Table 5.

**Table 5**

| Example | Catalyst | Temp. (°C) | Time (hr) | Conversion (%) | Yield (%) |
|---|---|---|---|---|---|
| 23 | {(EtO)₃Si}Co(CNtBu)₄ | 80 | 24 | > 99 | > 99 |
| 24 | {(EtO)₃Si}Co(CNAd)₄ | 80 | 24 | > 99 | > 99 |
| 25 | {Me₂(Me₃SiO)Si}Co(CNtBu)₄ | 50 | 24 | 89 | 89 |

### Curing reaction via silicone crosslinking reaction using silylcobalt catalyst

### Example 26

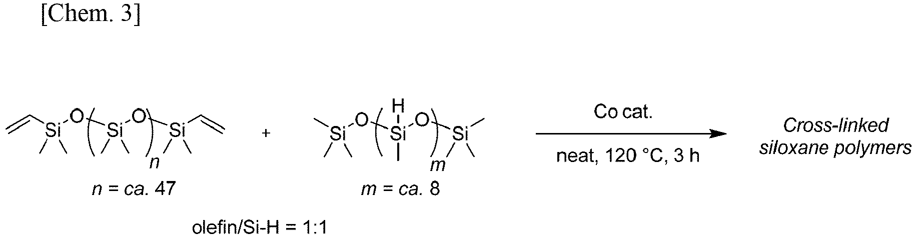

A reactor was charged with {(EtO)₃Si}Co(CNtBu)₄ (5.5 mg, 0.01 mmol) in Example 1, CH₂=CHSiMe₂O(SiMe₂O)ₙSiMe₂CH=CH₂ wherein n=~47 (2.87 g, vinyl -1.56 mmol), and Me₃SiO[SiH(OMe)]ₘSiMe₃ wherein m=~8 (0.13 g, Si-H bond -1.56 mmol), which were stirred at 120°C for 3 hours. During stirring, the time taken until the reaction solution cured was measured. The resulting solid was analyzed by IR spectroscopy (KBr method). There were observed peaks in the vicinity of 2,100 to 2,200 cm⁻¹ assigned to Si-H bond, from which the conversion rate of Si-H was determined. The results are shown in Table 6.

### Example 27

A reactor was charged with {(EtO)₃Si}Co(CNAd)₄ (8.7 mg, 0.01 mmol) in Example 2, CH₂=CHSiMe₂O(SiMe₂O)ₙSiMe₂CH=CH₂ wherein n=~47 (2.87 g, vinyl ~1.56 mmol), and Me₃SiO[SiH(OMe)]ₘSiMe₃ wherein m=~8 (0.13 g, Si-H bond ~1.56 mmol), which were stirred at 120°C for 3 hours. During stirring, the time taken until the reaction solution cured was measured. The resulting solid was analyzed by IR spectroscopy (KBr method). There were observed peaks in the vicinity of 2,100 to 2,200 cm⁻¹ assigned to Si-H bond, from which the conversion rate of Si-H was determined. The results are shown in Table 6.

### Comparative Example 1

A reactor was charged with Co₂(CNAd)₈ (7.0 mg, 0.005 mmol), CH₂=CHSiMe₂O(SiMe₂O)ₙSiMe₂CH=CH₂ wherein n=~47 (2.87 g, vinyl -1.56 mmol), and Me₃SiO[SiH(OMe)]ₘSiMe₃ wherein m=~8 (0.13 g, Si-H bond -1.56 mmol), which were stirred at 120°C for 3 hours. During stirring, the time taken until the reaction solution cured was measured. The resulting solid was analyzed by IR spectroscopy (KBr method). There were observed peaks in the vicinity of 2,100 to 2,200 cm⁻¹ assigned to Si-H bond, from which the conversion rate of Si-H was determined. The results are shown in Table 6.

### Comparative Example 2

A reactor was charged with cobalt (II) pivalate (3 mg, 0.01 mmol), adamantyl isocyanide (3 mg, 0.01 mmol), CH₂=CHSiMe₂O(SiMe₂O)ₙSiMe₂CH=CH₂ wherein n=~47 (2.87 g, vinyl ~1.56 mmol), and Me₃SiO[SiH(OMe)]ₘSiMe₃ wherein m=~8 (0.13 g, Si-H bond -1.56 mmol), which were stirred at 120°C for 3 hours. During stirring, the time taken until the reaction solution cured was measured. The resulting solid was analyzed by IR spectroscopy (KBr method). There were observed peaks in the vicinity of 2,100 to 2,200 cm⁻¹ assigned to Si-H bond, from which the conversion rate of Si-H was determined. The results are shown in Table 6.

### Comparative Example 3

A reactor was charged with cobalt(II) pivalate (3 mg, 0.01 mmol), adamantyl isocyanide (3 mg, 0.01 mmol), triethoxysilane (13 mg, 0.08 mmol), and dimethoxyethane (100 µL), which were stirred at room temperature for 1 hour. Thereafter CH₂=CHSiMe₂O(SiMe₂O)ₙSiMe₂CH=CH₂ wherein n=~47 (2.87 g, vinyl ~1.56 mmol), and Me₃SiO[SiH(OMe)]ₘSiMe₃ wherein m=~8 (0.13 g, Si-H bond -1.56 mmol) were added to the reactor. Even after 3 hours of stirring at 120°C, no curing to a polymer was observed.

**Table 6**

| | Catalyst | Time until cure | Conversion of Si-H (%) |
|---|---|---|---|
| Example 26 | {(EtO)₃Si}Co(CNtBu)₄ | 3 min | 82 |
| Example 27 | {(EtO)₃Si}Co(CNAd)₄ | 3 min | 79 |
| Comparative Example 1 | Co₂(CNAd)₈ | 3 min | 66 |
| Comparative Example 2 | Co(OPiv)₂/CNAd | 11 min | 69 |
| Comparative Example 3 | Co(OPiv)₂/CNAd/(EtO)₃SiH | > 3 hr | - |

### Evaluation of solubility of cobalt complex

### Example 28

The solubility around 25°C of cobalt complex was examined by adding CH₂=CHSiMe₂O(SiMe₂O)ₙSiMe₂CH=CH₂ wherein n=~47 in increments of 1 g to {(EtO)₃Si}Co(CNtBu)₄ (5.5 mg, 0.01 mmol) in Example 1. The cobalt complex was completely dissolved at around the time when a total of 8 g had been added.

### Comparative Example 4

The solubility around 25°C of cobalt complex was examined by adding CH₂=CHSiMe₂O(SiMe₂O)ₙSiMe₂CH=CH₂ wherein n=~47 in increments of 1 g to Co₂(CNtBu)₈ (3.9 mg, 0.005 mmol). Even after a total of 10 g was added, the cobalt complex was not completely dissolved, with some precipitates being observed.

## Claims

1. A cobalt complex having the following formula (1): 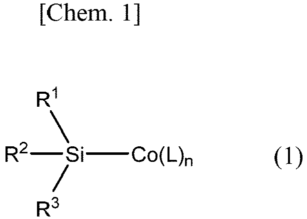
wherein each of R¹ to R³ independently is hydrogen or C₁-C₃₀ monovalent organic group which may be substituted with halogen and which may be interrupted by at least one atom selected from oxygen, nitrogen and silicon, at least one set of R¹ to R³ may bond together to form a C₁-C₃₀ crosslinking substituent which may be interrupted by at least one atom selected from oxygen, nitrogen and silicon, each L independently is an isocyanide ligand having the following formula (2):
CN-R⁴ (2)
wherein R⁴ is C₁-C₃₀ monovalent organic group which may be substituted with halogen and which may be interrupted by at least one atom selected from oxygen, nitrogen, sulfur and silicon, and n is 4.

2. A cobalt complex of claim 1 wherein R¹ to R³ are each hydrogen or a monovalent hydrocarbon, organooxy, monoorgnoamino, diorgnoamino, monoorgnosiloxy, diorganosiloxy, triorgnosiloxy or polyorganosiloxane group of 1 to 30 carbon atoms.

3. A cobalt complex of claim 1 or 2 wherein R⁴ in formula (2) is a C₁-C₂₀ alkyl, C₃-C₂₀ cycloalkyl, C₆-C₃₀ aryl or C₇-C₃₀ alkylaryl group.

4. A catalyst comprising a cobalt complex of any one of claims 1 to 3, the catalyst having activity for hydrosilylation reaction.

5. A method for preparing a hydrosilylation reaction product, comprising the step of effecting hydrosilylation reaction of a compound containing an aliphatic unsaturated bond with a compound containing a Si-H bond in the presence of a catalyst of claim 4.

6. A method of claim 5 wherein the compound containing an aliphatic unsaturated bond is an olefin compound, or a silane compound or organopolysiloxane having a silicon-bonded alkenyl group.

7. A method for preparing a cobalt complex of any one of claims 1 to 3, comprising the step of reacting a cobalt-containing transition metal salt, an isocyanide compound having formula (2), and a hydrosilane compound having the following formula (3):
H-SiR¹R²R³ (3)
wherein R¹ to R³ are as defined above.

8. A method of claim 7 wherein the cobalt-containing transition metal salt is a cobalt carboxylate.

9. A method for preparing a cobalt complex of any one of claims 1 to 3, comprising the step of reacting a cobalt complex having the following formula (4):
Co₂(L)₈ (4)
wherein L is as defined above, with a hydrosilane compound having the following formula (3):
H-SiR¹R²R³ (3)
wherein R¹ to R³ are as defined above.

## Patentansprüche

1. Cobalt-Komplex, der die folgende Formel (1) aufweist: 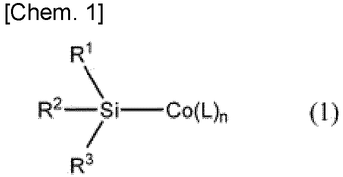
worin:
R¹ bis R³ jeweils unabhängig Wasserstoff oder eine einwertige organische C₁-C₃₀-Gruppe sind, die gegebenenfalls mit Halogen substituiert ist und die gegebenenfalls durch zumindest ein Atom unterbrochen ist, das aus Sauerstoff, Stickstoff und Silicium ausgewählt ist, wobei gegebenenfalls zumindest ein Satz aus R¹ bis R³ miteinander zu einem vernetzenden C₁-C₃₀-Substituenten verbunden ist, der gegebenenfalls durch zumindest ein Atom unterbrochen ist, das aus Sauerstoff, Stickstoff und Silicium ausgewählt ist; die L jeweils unabhängig ein Isocyanid-Ligand der folgenden Formel (2) sind:
CN-R⁴ (2)
worin R⁴ eine einwertige organische C₁-C₃₀-Gruppe ist, die gegebenenfalls mit Halogen substituiert ist und die gegebenenfalls durch zumindest ein Atom unterbrochen ist, das aus Sauerstoff, Stickstoff und Silicium ausgewählt ist; und n = 4 ist.

2. Cobalt-Komplex nach Anspruch 1, worin R¹ bis R³ jeweils Wasserstoff oder eine einwertige Kohlenwasserstoff-, Organooxy-, Monoorganoamino-, Diorganoamino-, Monoorganosiloxy-, Diorganosiloxy-, Triorganosiloxy- oder Polyorganosiloxan-Gruppe mit 1 bis 30 Kohlenstoffatomen sind.

3. Cobalt-Komplex nach Anspruch 1 oder 2, wobei R⁴ in Formel (2) eine C₁-C₂₀-Alkyl-, C₃-C₂₀-Cycloalkyl-, C₆-C₃₀-Aryl- oder C₇-C₃₀-Alkylaryl-Gruppe ist.

4. Katalysator, der einen Cobalt-Komplex nach einem der Ansprüche 1 bis 3 umfasst, wobei der Katalysator eine Aktivität für Hydrosilylierungsreaktionen besitzt.

5. Verfahren zur Herstellung eines Hydrosilylierungsreaktionsprodukts, das den Schritt des Durchführens einer Hydrosilylierungsreaktion einer Verbindung, die eine aliphatische ungesättigte Bindung enthält, mit einer Verbindung, die eine Si-H-Bindung enthält, in Gegenwart eines Katalysators nach Anspruch 4 umfasst.

6. Verfahren nach Anspruch 5, wobei die Verbindung, die eine aliphatische ungesättigte Bindung enthält, eine Olefin-Verbindung oder eine Silan-Verbindung oder ein Organopolysiloxan, das eine Silicium-gebundene Alkenylgruppe aufweist, ist.

7. Verfahren zur Herstellung eines Cobalt-Komplexes nach einem der Ansprüche 1 bis 3, das den Schritt des Umsetzens eines Cobalt-hältigen Übergangsmetallsalzes, einer Isocyanid-Verbindung der Formel (2) und einer Hydrosilan-Verbindung der folgenden Formel (3) umfasst:
H-SiR¹R²R³ (3)
worin R¹ bis R³ wie oben definiert sind.

8. Verfahren nach Anspruch 7, wobei das Cobalt-hältige Übergangsmetallsalz ein Cobaltcarboxylat ist.

9. Verfahren zur Herstellung eines Cobalt-Komplexes nach einem der Ansprüche 1 bis 3, das den Schritt des Umsetzens eines Cobalt-Komplexes der folgenden Formel (4):
Co₂(L)₈ (4)
worin L wie oben definiert ist, mit einer Hydrosilan-Verbindung der folgenden Formel (3) umfasst:
H-SiR¹R²R³ (3)
worin R¹ bis R³ wie oben definiert sind.

## Revendications

1. Complexe de cobalt présentant la formule (1) suivante : 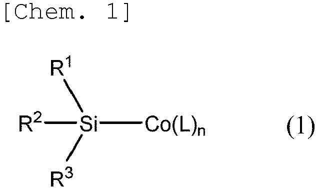
dans lequel chacun de R¹ à R³ est indépendamment un atome d'hydrogène ou un groupe organique monovalent en C₁-C₃₀ qui peut être substitué par un atome d'halogène et qui peut être interrompu par au moins un atome choisi parmi l'oxygène, l'azote et le silicium, au moins un ensemble de R¹ à R³ peuvent se lier ensemble pour former un substituant de réticulation en C₁-C₃₀ qui peut être interrompu par au moins un atome choisi parmi l'oxygène, l'azote et le silicium, chaque L est indépendamment un ligand d'isocyanure présentant la formule (2) suivante :
CN-R⁴ 2
dans lequel R⁴ est un groupe organique monovalent en C₁-C₃₀ qui peut être substitué par un halogène et qui peut être interrompu par au moins un atome choisi parmi l'oxygène, l'azote, le soufre et le silicium, et n est 4.

2. Complexe de cobalt selon la revendication 1, dans lequel R¹ à R³ représentent chacun un atome d'hydrogène ou un groupe hydrocarboné monovalent, organooxy, monoorgnoamino, diorgnoamino, monoorgnosiloxy, diorganosiloxy, triorgnosiloxy ou polyorganosiloxane de 1 à 30 atomes de carbone.

3. Complexe de cobalt selon la revendication 1 ou 2, dans lequel R⁴ dans la formule (2) est un groupe alkyle en C₁-C₂₀, cycloalkyle en C₃-C₂₀, aryle en C₆-C₃₀ ou alkylaryle en C₇-C₃₀.

4. Catalyseur comprenant un complexe de cobalt selon l'une quelconque des revendications 1 à 3, le catalyseur présentant une activité pour une réaction d'hydrosilylation.

5. Procédé de préparation d'un produit de réaction d'hydrosilylation, comprenant l'étape consistant à effectuer une réaction d'hydrosilylation d'un composé contenant une liaison insaturée aliphatique avec un composé contenant une liaison Si-H en présence d'un catalyseur selon la revendication 4.

6. Procédé selon la revendication 5, dans lequel le composé contenant une liaison insaturée aliphatique est un composé oléfinique, ou un composé de silane ou d'organopolysiloxane présentant un groupe alcényle lié au silicium.

7. Procédé de préparation d'un complexe de cobalt selon l'une quelconque des revendications 1 à 3, comprenant l'étape de mise en réaction d'un sel de métal de transition contenant du cobalt, d'un composé d'isocyanure présentant la formule (2) et d'un composé d'hydrosilane présentant la formule (3) suivante :
H-SiR¹R²R³ (3)
dans lequel R¹ à R³ sont tels que définis ci-dessus.

8. Procédé selon la revendication 7, dans lequel le sel de métal de transition contenant du cobalt est un carboxylate de cobalt.

9. Procédé de préparation d'un complexe de cobalt selon l'une quelconque des revendications 1 à 3, comprenant l'étape de mise en réaction d'un complexe de cobalt présentant la formule (4) suivante :
Co₂(L)₈ (4)
dans lequel L est tel que défini ci-dessus, avec un composé d'hydrosilane présentant la formule (3) suivante :
H-SiR¹R²R³ (3)
dans lequel R¹ à R³ sont tels que définis ci-dessus.
